# EUROPÄISCHE PATENTSCHRIFT

(11) **EP 1 797 940 B1**
(45) Veröffentlichungstag und Bekanntmachung des Hinweises auf die Patenterteilung: **18.02.2009**
(21) Anmeldenummer: 06126341.4
(22) Anmeldetag: 18.12.2006
(51) Int. Cl.: B01D 46/52

(54) **Filter**
Filter
Filtre

(30) Priorität: 19.12.2005 DE 202005019910 U
(43) Veröffentlichungstag der Anmeldung: 20.06.2007
(73) Patentinhaber: MANN+HUMMEL GmbH, 71638 Ludwigsburg (DE)
(72) Erfinder: Rohrmeier, Josef, Laberweiniting 84082 (DE); Gerlach, Karin, WEningen u.A 72800 (DE); Lichtenwalter, Kathrin, Gerlingen 70839 (DE); Linhart, Jochen, Schwaikheim 71409 (DE); Franz, Andreas, Ludwigsburg 71638 (DE); Sieber, Thomas, Marklkofen 84163 (DE); Schaeffer, Jürgen Dr., 82319 Starnberg/Perchting (DE)

(56) Entgegenhaltungen:
- DE-U1- 20 310 495
- US-A- 3 346 121
- US-A1- 2002 096 247

## Beschreibung

### Technisches Gebiet

Die Erfindung betrifft einen Filter nach dem Oberbegriff des Anspruches 1 zur Abscheidung von Partikeln aus einem Fluidstrom.

### Stand der Technik

Es sind Filter bekannt, welche über ein spiralförmig gewickeltes Filtermedium verfügen. Das Filtermedium besteht aus einer gewellten Filterlage und einem planen Filterblatt Die gewellte Filterlage verfügt über Wellentäler und Wellenberge. Zur Verbindung der Filterlage mit dem Filterblatt, sind die Wellentäler mit dem Filterblatt verklebt. Zwischen den Wellenbergen und dem Filterblatt werden so Kanäle gebildet. Durch das Aufwickeln des Filtermediums werden zwischen den Wellentälern und dem darüber gewickelten Filterblatt ebenfalls Kanäle erzeugt. Die Stirnseiten der Kanäle sind wechselseitig verschlossen, so dass das zu reinigende Fluid in einen Kanal einströmen kann, durch das Filterblatt bzw. die Filterlage hindurchströmen und durch den benachbarten Kanal aus dem Filter herausströmen kann. Das Verbinden der gewellten Filterlage mit dem Filterblatt und das stirnseitige Verschließen der Kanäle erfolgt mit einem Klebstoff. Beim Verbinden der Wellentäler mit dem Filterblatt wird durch den Klebstoffauftrag Filterfläche blockiert. Zum wechselseitigen Verschließen der Kanäle wird Klebstoff zwischen das Filterblatt und die Filterlage aufgetragen. Dieser Klebstoff füllt das, zwischen den Wellenbergen und dem Filterblatt gebildete Volumen aus, wozu eine große Menge an Klebstoff erforderlich ist.

Aufgabe der Erfindung ist es daher einen Filter zu schaffen, welcher kostengünstig herstellbar ist und die Filterfläche nicht reduziert. Diese Aufgabe wird durch den Anspruch 1 gelöst.

### Offenbarung der Erfindung

Der erfindungsgemäße Filter dient zur Abscheidung von Partikeln aus einem Fluidstrom, insbesondere aus Gasen wie Luft. Hierzu verfügt der Filter über ein Filtermedium, welches spiralförmig aufgewickelt ist. Das Filtermedium ist durch eine gewellte Filterlage und planes Filterblatt gebildet, wobei beide Medien aus einem, für das zu reinigende Fluid durchlässigen Filtermaterial bestehen. Derartige Filtermaterialien sind z.B. Vliese, Zellulosepapiere oder Gemische daraus, wobei diese Filtermaterialien derart formstabil sind, dass eine eingeprägte Wellenform auch nach dem Entfernen eines Formwerkzeugs bestehen bleibt. Diese Formstabilität kann auch durch einen nachfolgenden Behandlungsvorgang, wie z.B. Aushärten oder Beschichten erreicht werden. Die gewellte Filterlage weist Täler und Berge auf, wobei die Täler der gewellten Filterlage mit dem planen Filterblatt verbunden sind. Zwischen den Bergen und dem Filterblatt sind Kanäle gebildet, welche stirnseitig verschlossen sind. Durch das Aufwickeln des Filtermediums kontaktieren die Berge der gewellten Filterlage die Unterseite des Filterblattes der nachfolgenden Lage. Dadurch bilden sich Kanäle zwischen dem Tal und der nachfolgenden Lage.

Zur Verbindung des Filterblattes mit der Filterlage ist zwischen den Tälern und dem planen Filterblatt eine Formschlussverbindung angeordnet, welche durch ein partielles Überlappen des Filterblattes mit der Filterlage erreicht wird. Das Überlappen kann z.B. durch eine Falte oder einen Knick erreicht werden, wobei sich die beiden Teile durch ihre Formstabilität aneinander fixieren. Durch diese Form der Verbindung ist die Verwendung eines zusätzlichen Verbindungsmittels überflüssig, wodurch die gesamte Filterfläche zur Reinigung des Fluidstromes zur Verfügung steht. Weiterhin können Materialkosten für Klebstoffe eingespart werden. Außerdem wird die Entsorgbarkeit verbessert, da es sich bei dem Filter um ein sortenreines Bauteil handelt. Somit kann der Filter einfach verascht werden, ohne dass Rückstände von anderen Stoffen entstehen.

Bei einer vorteilhaften Weiterbildung der Erfindung ist der Verschluss der Kanäle im Bereich der Stirnseite durch eine Formschlussverbindung erzeugt, wobei die Berge an das Filterblatt angedrückt sind. Durch das Andrücken der Berge an das Filterblatt wird das zu verschließende Volumen erheblich reduziert. Weiterhin werden die Berge mit sich selbst und dem Filterblatt durch umgeschlagene Falten oder Knicke verbunden. Somit ist für das Verschließen der Kanäle kein zusätzliches Material erforderlich, wodurch Materialkosten eingespart werden. Weiterhin wird der Herstellungszyklus verkürzt, da keine Aushärtezeiten für Klebstoffe oder sonstige Komponenten erforderlich sind. Durch das Andrücken der Berge an das Filterblatt wird die Anströmung der Kanäle verbessert, da der Strömungswiderstand der verschlossenen Kanäle reduziert ist.

Es ist vorteilhaft, dass die Formschlussverbindung durch Prägen erzeugt ist, wobei Vertiefungen des Filterblattes bzw. der Filterlage in Vertiefungen der Filterlage bzw. des Filterblattes eingreifen. Derartige Vertiefungen können als runde, ovale oder eckige Prägepunkte ausgebildet sein, wobei beide Filterschichten (Filterblatt und Filterlage) gleichzeitig in Kontakt mit dem Prägewerkzeug stehen. Die obere Filterschicht, welche einem Stempel kontaktiert, wird in die untere Filterschicht, welche auf eine Matrize aufliegt, gedrückt. Somit werden beide Filterschichten passgenau miteinander verprägt. Durch das Einprägen von Vertiefungen in die Filterlage und das Filterblatt erübrigen sich zusätzliche Falten, wodurch der gesamte Bauraum und das gesamte Filtermedium für die Filtration verwendbar sind.

Zur Herstellung der Formschlussverbindung ist die Verwendung einer Prägewalze vorteilhaft. Durch eine Prägewalze können gleichmäßige Prägepunkte schnell und einfach erzeugt werden. Hierbei sind einerseits die Abstände zwischen der einzelnen Punkten, sowie die Ausgestaltung der Prägepunkte regelmäßig. Somit ist eine über das gesamt Filtermedium gleich bleibende Verbindung erzeugt.

### Kurze Beschreibung der Zeichnungen

Weitere Einzelheiten der Erfindung werden nachfolgend anhand von schematischen Ausführungsbeispielen beschrieben. Hierbei zeigt

Figur 1 einen Ausschnitt aus einem Filtermedium,

Figur 2 ein Prägepunkt im Schnitt,

Figur 3 ein Filtermedium beim Aufwickeln,

Figur 4 einen Ausschnitt aus einem Filtermedium mit verschlossenen Stirnseiten,

### Ausführungsform(en) der Erfindung

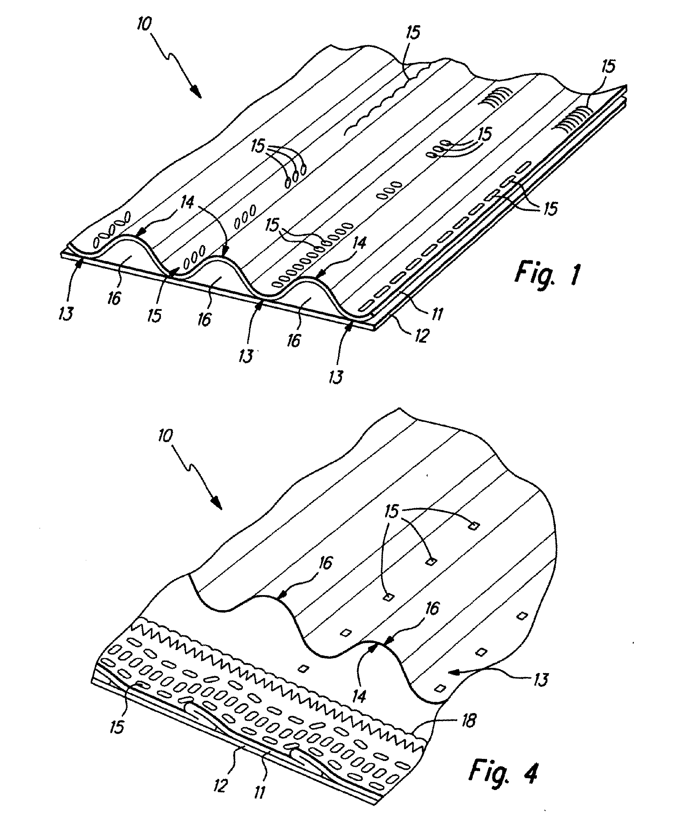

In Figur 1 ist ein Ausschnitt aus einem Filtermedium 10 in perspektivischer Ansicht dargestellt, wobei diese Darstellung einer Teilfertigungsstufe entspricht. Das Filtermedium 10 dieser Darstellung wird in einem nachfolgenden Verfahren weiterverarbeitet. Das Filtermedium 10 verfügt über eine gewellte Filterlage 11 und ein flaches Filterblatt 12. Beide Filterschichten 11, 12 bestehen aus dem gleichen Zellulosepapier, welches formstabil ist. Die gewellte Filterlage 11 verfügt über Täler 13 und Berge 14. Die Täler 13 sind mit dem flachen Filterblatt 12 durch Prägepunkte 15 verbunden, wodurch die Filterlage 11 auf dem Filterblatt 12 fixiert ist. Die Prägepunkte 15 sind linear entlang der Talsohle, welche den tiefsten Punkt des Tales 13 bildet, nur in Teilbereichen angeordnet. Zwischen den Bergen 14 und dem Filterblatt 12 werden parallel zueinander verlaufende Kanäle 16 gebildet. Da die Prägepunkte 15 keine dichtende Verbindung zwischen den Filterschichten 11, 12 bilden, können Volumenströme von einem Kanal 16 zum parallel verlaufenden nächsten Kanal 16 strömen. Da die parallel verlaufenden Kanäle 16 das gleiche Rohfluid bzw. Reinfluid führen ist ein Leckagestrom von einem Kanal 16 zum anderen Kanal 16 ohne Bedeutung.

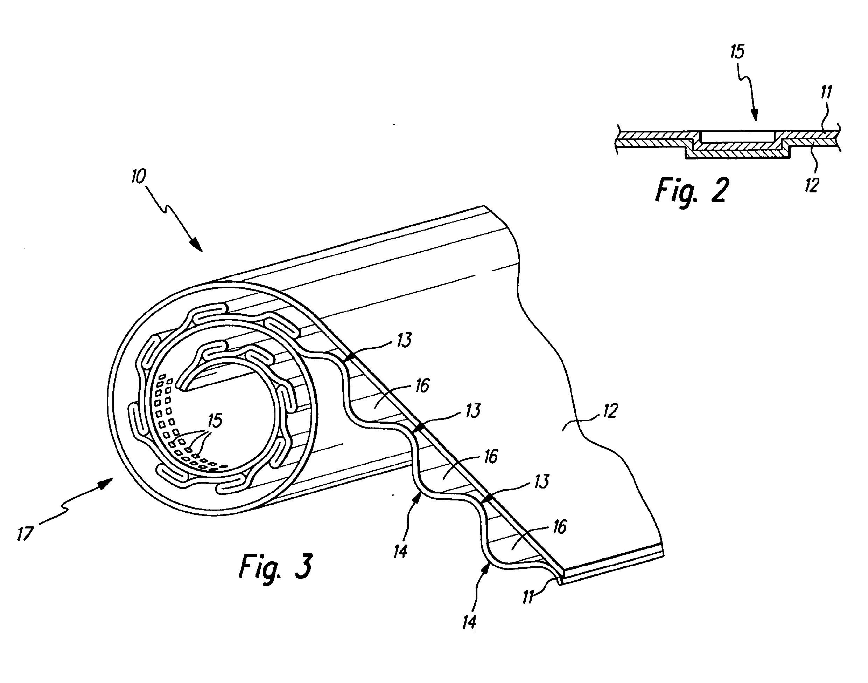

In Figur 2 ist ein Prägepunkt 15 im Schnitt dargestellt. Der Prägepunkt 15 bildet eine formschlüssige Verbindung zwischen der gewellten Filterlage 11 und dem planen Filterblatt 12. Beide Filterschichten 11, 12 sind derart verformt, dass die Vertiefungen dauerhaft, auch nach dem Entfernen der Werkzeuge (nicht dargestellt) bestehen bleiben. Die Vertiefung in dem planen Filterblatt 12 bildet die Aufnahme für die Vertiefung der Filterlage 11. Da beide Filterschichten 11, 12 ineinander greifen, sind die Haltekräfte ausreichend, um ein unkontrolliertes Lösen der Filterschichten 11, 12 voneinander zu verhindern.

In Figur 3 ist das Filtermedium 10 gemäß Figur 1 beim Aufwickeln dargestellt. Der Figur 1 oder 2 entsprechende Bauteile sind mit gleichen Bezugszeichen versehen. Die gemäß Figur 1 verbundenen Filterschichten 11, 12 werden zu einem Wickel 17 aufgerollt. Hierbei werden die Kanäle 16 stirnseitig verschlossen. Die Berge 14 werden hierzu an das Filterblatt 12 angedrückt und mit Prägepunkten 15 fixiert. Außerhalb der stirnseitig angedrückten Bereiche bestehen die Kanäle 16 weiterhin. Auf der gegenüberliegend angeordneten Stirnseite verfügen die Kanäle 16 über ihre Wellenform. Das Verschließen der Kanäle 16 wird nachfolgend anhand der Figur 4 beschrieben.

In Figur 4 ist ein Ausschnitt aus dem Filtermedium 10 mit verschlossenen Kanälen 16 dargestellt. Der Figur 1 bzw. 3 entsprechende Bauteile sind mit gleichen Bezugszeichen versehen. Die Stirnseiten der Kanäle 16 sind durch das Andrücken der Berge 14 verschlossen. Durch das Andrücken sind die Berge 14 als Falte ausgebildet, wobei diese Materialanhäufung durch die Prägepunkte 15 fixiert ist. Hierbei findet einerseits eine Verbindung mit der Filterlage 11 selbst und mit dem Filterblatt 12 statt. Zur sicheren Verbindung sind mehrere parallel zueinander verlaufende Prägereihen 18 vorgesehen.

## Patentansprüche

1. Filter, mit einem Filtermedium (10), welches spiralförmig aufgewickelt ist, wobei das Filtermedium (10) über eine gewellte Filterlage (11) und über ein planes Filterblatt (12) verfügt und die gewellte Filterlage (11) Täler (13) und Berge (14) aufweist, wobei die Täler (13) der gewellten Filterlage (11) mit dem planen Filterblatt (12) verbunden sind und zwischen den Bergen (14) und dem Filterblatt (12) wechselseitig verschlossene Kanäle (16) gebildet sind, **dadurch gekennzeichnet, dass** die Verbindung zwischen den Tälern (13) und dem planen Filterblatt (12) eine Formschlussverbindung ist.

2. Filter nach Anspruch 1, **dadurch gekennzeichnet, dass** der Verschluss der Kanäle (16) im Bereich der Stirnseite durch eine Formschlussverbindung erzeugt ist, wobei die Berge (14) an das Filterblatt (12) angedrückt sind.

3. Filter nach einem der Ansprüche 1 oder 2, **dadurch gekennzeichnet, dass** die Formschlussverbindung durch Prägen erzeugt ist, wobei Vertiefungen des Filterblattes (12) bzw. der Filterlage (11) in Vertiefungen der Filterlage (11) bzw. des Filterblattes (12) eingreifen.

4. Filter nach einem der vorangehenden Ansprüche, **dadurch gekennzeichnet, dass** die Formschlussverbindung mit einer Prägewalze herstellbar ist.

## Claims

1. Filter with a filter medium (10) which is wound up in a spiral-shaped design, the filter medium (10) being provided with an undulated filter layer (11) and a plane filter sheet (12) and the undulated filter layer (11)featuring indentations (13) and protuberances (14), the indentations (13) of the undulated filter layer (11) being connected with the plane filter sheet (12) and alternately closed channels (16) being formed between the protuberances (14) and the filter sheet (12), **characterized in that** the connection between the indentations (13) and the plane filter sheet (12) is a positive-engagement connection.

2. Filter according to claim 1, **characterized in that** the closure of the channels (16) in the area of the front end is generated by a positive-engagement connection, the protuberances (14) being pressed against the filter sheet (12).

3. Filter according to one of the claims 1 or 2, **characterized in that** the positive-engagement connection is generated by embossing, recesses of the filter sheet (12) or the filter layer (11) engaging with recesses of the filter layer (11) and/or the filter sheet (12).

4. Filter according to one of the above claims, **characterized in that** the positive-engagement connection can be manufactured by means of an embossing roller.

## Revendications

1. Filtre avec un milieu filtrant (10) enroulé en forme de spirale, le milieu filtrant (10) disposant d'une couche filtrante ondulée (11) et d'une plaque de filtre plane (12) et la couche de filtre ondulée (11) présentant des renfoncements (13) et des protubérances (14), les renfoncements (13) de la couche filtrante ondulée (11) étant reliés avec la plaque de filtre plane (12) et des canaux fermés en alternance (16) étant formés entre les protubérances (14) et la plaque de filtre (12), **caractérisé en ce que** la liaison entre les renfoncements (13) et la plaque de filtre plane (12) est un assemblage par conformation.

2. Filtre selon la revendication 1, **caractérisé en ce que** la fermeture des canaux (16) est générée, dans la zone de la face frontale, par un assemblage par conformation, les protubérances (14) étant pressées contre la plaque de filtre (12).

3. Filtre selon l'une des revendications 1 ou 2, **caractérisé en ce que** l'assemblage par conformation est généré par gaufrage, des renfoncements de la plaque de filtre (12) et/ou de la couche filtrante (11) étant pris dans des renfoncements de la couche filtrante (11) et/ou de la plaque de filtre (12).

4. Filtre selon l'une des revendications précédentes, **caractérisé en ce que** l'assemblage par conformation peut être fabriqué au moyen d'un rouleau gaufreur.
